# EUROPÄISCHE PATENTANMELDUNG

(11) **EP 4 137 296 A1**
(43) Veröffentlichungstag der Anmeldung: **22.02.2023**
(21) Anmeldenummer: 21192084.8
(22) Anmeldetag: 19.08.2021
(51) Int. Cl.: B29C 65/22, B29C 65/38

(54) **VERFAHREN ZUR ÜBERWACHUNG EINES SCHWEISSVORGANGS FÜR KUNSTSTOFFFOLIEN UND SCHWEISSEINRICHTUNG ZUM VERSCHWEISSEN VON KUNSTSTOFFFOLIEN**

(71) Anmelder: ROPEX Industrie-Elektronik GmbH, 74321 Bietigheim-Bissingen (DE)
(72) Erfinder: Schuller, Manuel, 74321 Bietigheim-Bissingen (DE); Baier, Maximilian, 70191 Stuttgart (DE); Peters, Frank, 74321 Bietigheim-Bissingen (DE); Sick, Georg, 82340 Feldafing (DE)
(74) Vertreter: Patentanwälte Magenbauer & Kollegen Partnerschaft mbB

(57) **Zusammenfassung**

Die Erfindung betrifft ein Verfahren zur Überwachung eines Schweißvorgangs für Kunststofffolien (2, 3) mit den Schritten: Anordnen eines Überlappungsbereichs (11), der von einer ersten Kunststofffolie (2) und von einer zweiten Kunststofffolie (3) gebildet wird, in einer Schweißzone (10), die von einer ersten Schweißschiene (4) und von einer zweiten Schweißschiene (5) begrenzt wird, Ermitteln einer Kapazität und/oder einer Impedanz für den Überlappungsbereich (11) vor einer Erhitzung der Schweißzone (10) und/oder während der Erhitzung der Schweißzone (10) und/oder nach der Erhitzung der Schweißzone (10) und Auswertung der ermittelten Kapazität und/oder Impedanz in einer Messeinrichtung (7).

## Beschreibung

Die Erfindung betrifft ein Verfahren zur Überwachung eines Schweißvorgangs für Kunststofffolien und eine Schweißeinrichtung zum Verschweißen von Kunststofffolien.

Aus dem Stand der Technik sind unterschiedliche Verfahren zum Verschweißen von Kunststofffolien bekannt, wobei häufig eine linienförmige, insbesondere gerade, Schweißnaht zwischen einer ersten Kunststofffolie und einer zweiten Kunststofffolie hergestellt wird, um beispielsweise eine als Schlauchbeutel ausgebildete Verpackung zu verschließen. Für die Durchführung des Schweißverfahrens ist vorgesehen, eine lokale Wärmezufuhr längs der vorgesehenen Schweißnaht mit einem geeigneten Schweißwerkzeug durchzuführen. Ein solches Schweißwerkzeug umfasst beispielsweise ein als elektrischer Widerstand ausgebildetes Heizband, das an einer Oberfläche einer formstabilen Schweißschiene aus Metall festgelegt ist und das von der Anmelderin unter der Produktbezeichnung RESISTRON vertrieben wird. Alternativ werden Schweißwerkzeuge eingesetzt, die eine Schweißschiene aus Metall mit einer in Dickschichttechnik hergestellten, elektrisch leitfähigen Schweißleitung aufweisen und die von der Anmelderin unter der Produktbezeichnung CIRUS vertrieben werden. Die Bereitstellung der zur Durchführung des Schweißvorgangs notwendigen elektrischen Energie erfolgt durch einen spezifisch abgestimmten Schweißtransformator in gesteuerter Weise (open loop) oder geregelter Weise (closed loop).

Die Aufgabe der Erfindung besteht darin, ein Verfahren zur Überwachung eines Schweißvorgangs für Kunststofffolien und eine Schweißeinrichtung zum Verschweißen von Kunststofffolien bereitzustellen, mit denen eine verbesserte Überwachung des Schweißvorgangs ermöglicht wird.

Diese Aufgabe wird für das Verfahren zur Überwachung des Schweißvorgangs mit den folgenden Schritten gelöst: Anordnen eines Überlappungsbereichs, der von einer ersten Kunststofffolie und von einer zweiten Kunststofffolie gebildet wird, in einer Schweißzone, die von einer ersten Schweißschiene und von einer zweiten Schweißschiene begrenzt wird, Ermitteln einer Kapazität und/oder einer Impedanz für den Überlappungsbereich vor einer Erhitzung der Schweißzone und/oder während der Erhitzung der Schweißzone und/oder nach der Erhitzung der Schweißzone. Vorzugsweise erfolgt die Ermittlung und Auswertung der ermittelten Kapazität und/oder Impedanz in einer Messeinrichtung, die wenigstens mit der ersten Schweißschiene verbunden ist.

Bei der ersten Kunststofffolie und der zweiten Kunststofffolie, die im Überlappungsbereich aufeinander aufliegen und im Zuge des Schweißvorgangs stoffschlüssig miteinander verbunden werden sollen, kann es sich um Abschnitte der gleichen Kunststofffolie handeln, alternativ handelt es sich um zwei separate Kunststofffolien. Üblicherweise ist der Überlappungsbereich benachbart zu einer Kante der jeweiligen Kunststofffolie angeordnet, alternativ ist der Überlappungsbereich in einem zentralen Abschnitt der jeweiligen Kunststofffolie angeordnet. Typischerweise umfasst der Überlappungsbereich die erste Kunststofffolie und die zweite Kunststofffolie, es kann jedoch auch vorgesehen werden, dass zusätzlich eine dritte oder weitere Kunststofffolien im Überlappungsbereich angeordnet werden, um im Zuge der Schweißverfahren stoffschlüssig miteinander verbunden zu werden.

Die erste Schweißschiene und die zweite Schweißschiene sind gegenüberliegend zueinander angeordnet und können mit Hilfe eines Aktors an einander angenähert bzw. voneinander entfernt werden, um einen größenvariablen Schweißspalt auszubilden, der auch als Schweißzone bezeichnet wird. In diese Schweißzone wird der Überlappungsbereich eingebracht, anschließend erfolgt eine Annäherung der ersten Schweißschiene an die zweite Schweißschiene, um einen zur Durchführung des Schweißvorgangs ausreichenden Druck auf den Überlappungsbereich ausüben zu können. In einem nachfolgenden Schritt erfolgt die Erhitzung des Überlappungsbereichs, wobei hier zusätzlich eine Aufrechterhaltung des Drucks oder eine Vergrößerung des Drucks vorgesehen werden kann, der von den Schweißschienen auf den Überlappungsbereich ausgeübt wird.

Um eine Kontrolle des Schweißvorgangs zu ermöglichen, ist vorgesehen, eine Kapazitätsermittlung und/oder oder eine Impedanzermittlung durchzuführen, wobei hierzu die Kapazität bzw. Impedanz des Überlappungsbereichs ermittelt wird, der zwischen der ersten Schweißschiene und der zweiten Schweißschiene aufgenommen ist. Hierbei liegt die Überlegung zugrunde, dass die beiden Kunststofffolien vor der Durchführung des Schweißvorgangs eine Kapazität und/oder Impedanz aufweisen, die innerhalb eines vorgegebenen ersten Kapazitätsintervalls und/oder Impedanzintervalls liegt und dass während der Durchführung des Schweißvorgangs und/oder nach der Durchführung des Schweißvorgangs eine zweite Kapazität und/oder Impedanz vorliegt, die bei korrektem Verlauf des Schweißvorgangs innerhalb eines zweiten Kapazitätsintervalls und/oder Impedanzintervalls liegt. Hierbei wird davon ausgegangen, dass Abweichungen in der Kapazität und/oder in der Impedanz des Überlappungsbereichs einen Hinweis darauf geben, dass der Überlappungsbereich von vornherein fehlerhaft ist und/oder während des Schweißvorgangs eventuell Fehler auftreten und/oder der Schweißvorgang nicht in gewünschter Weise durchgeführt werden konnte.

Eventuelle Abweichungen in der Kapazität und/oder Impedanz können beispielsweise damit zusammenhängen, dass die erste Kunststofffolie und die zweite Kunststofffolie im Überlappungsbereich nicht ordnungsgemäß aufeinander aufliegen und beispielsweise eine oder mehrere Falten in einer der beiden Kunststofffolien vorliegen. Ergänzend oder alternativ kann eine Abweichung in der Kapazität und/oder Impedanz einen Hinweis darauf geben, dass Fremdkörper im Überlappungsbereich, insbesondere zwischen der ersten Kunststofffolie und der zweiten Kunststofffolie, angeordnet sind, die die Nahtqualität für die zu erstellende Schweißnaht in Frage stellen. Darüber hinaus kann der Fall auftreten, dass der Schweißvorgang aufgrund von Materialeigenschaften der ersten Kunststofffolie und/oder der zweiten Kunststofffolie oder aufgrund von Unzulänglichkeiten der ersten Schweißschiene und/oder der zweiten Schweißschiene sowie des Schweißtransformators nicht korrekt durchgeführt werden kann. Hieraus kann ebenfalls resultieren, dass die Kapazität und/oder Impedanz des Überlappungsbereichs nach der Durchführung des Schweißvorgangs nicht innerhalb eines vorgegebenen Kapazitätsintervalls und/oder Impedanzintervalls liegt. Die Ermittlung und Auswertung der Kapazität und/oder Impedanz erfolgt in einer Messeinrichtung, die elektrisch mit der ersten Schweißschiene und/oder mit der zweiten Schweißschiene gekoppelt ist und für die Durchführung des Messvorgangs zur Ermittlung der Kapazität und/oder Impedanz ausgebildet ist.

Vorteilhafte Weiterbildungen der Erfindung sind Gegenstand der Unteransprüche.

Zweckmäßig ist es, wenn von der Messeinrichtung für die Ermittlung der Kapazität und/oder der Impedanz eine vorgegebene elektrische Ladungsmenge an die erste Schweißschiene bereitgestellt wird und wenn die zweite Schweißschiene auf einem konstanten elektrischen Potential liegt oder wenn eine zeitlich variable elektrische Spannung zwischen der ersten Schweißschiene und der zweiten Schweißschiene angelegt wird und wenn eine Ermittlung eines elektrischen Spannungsverlaufs und/oder eines elektrischen Stromverlaufs vorgenommen wird, um die Kapazität und/oder Impedanz zu bestimmen.

Beispielhaft ist vorgesehen, die erste Schweißschiene mit einer konstanten elektrischen Ladungsmenge zu beaufschlagen und die zweite Schweißschiene auf ein definiertes elektrisches Potenzial, insbesondere ein Massepotential, zu legen. Zur Ermittlung der Kapazität des zwischen der ersten Schweißschiene und der zweiten Schweißschiene angeordneten Materials wird die elektrische Spannung zwischen der ersten Schweißschiene und der zweiten Schweißschiene gemessen. Da während der Durchführung des Schweißvorgangs eine Annäherung zwischen der ersten Schweißschiene der zweiten Schweißschiene vorgesehen ist und durch die Verschweißung der ersten Kunststofffolie mit der zweiten Kunststofffolie eine Kapazitätsänderung im Schweißspalt auftritt, ergibt sich eine Spannungsänderung, wobei der dabei auftretende Spannungsverlauf mit einem Referenz-Spannungsverlauf verglichen werden kann, um Rückschlüsse auf die Qualität des Schweißvorgangs und eventuell vorhandene Fremdkörper in der Schweißnaht ziehen zu können. Das hierbei zugrundeliegende Messprinzip ist aus dem Bereich der Kondensatormikrofone bekannt.

Alternativ wird zugrunde gelegt, dass die erste Schweißschiene als erste Kondensatorplatte dient und dass die zweite Schweißschiene als zweite Kondensatorplatte dient und der Überlappungsbereich, der aus der ersten Kunststofffolie und der zweiten Kunststofffolie gebildet wird, ein Dielektrikum bildet, sofern die beiden Kunststofffolien jeweils eine verschwindende elektrische Leitfähigkeit aufweisen, was üblicherweise der Fall ist. Dabei ist die gespeicherte Ladung pro angelegter Spannung, die auch als Kapazität bezeichnet wird, insbesondere von den Materialeigenschaften der ersten Kunststofffolie und der zweiten Kunststofffolie sowie von der Anordnung der ersten Kunststofffolie an der zweiten Kunststofffolie abhängig. In diesem Fall erfolgt eine Kapazitätsmessung mittels einer zeitlich variablen Spannung, die zwischen der ersten Schweißschiene und der zweiten Schweißschiene, insbesondere zwischen dem ersten Heizband der ersten Schweißschiene und dem zweiten Heizband der zweiten Schweißschiene, angelegt wird.

Beispielsweise wird die Kapazität dadurch beeinflusst, dass eventuell Falten in der ersten Kunststofffolie vorliegen, die zu einer lokalen Vervielfachung der Materialstärke des Überlappungsbereichs führen können und die mit danebenliegenden Bereichen einhergehen kann, in denen Luft in der Schweißnaht angeschlossen wird. In jedem Fall wird hierdurch eine Verschlechterung der Schweißnaht in Kauf zu nehmen sein, die mit einer Veränderung der Kapazität und/oder Impedanz einhergeht. Um die Kapazität und/oder die Impedanz ermitteln zu können, erfolgt eine Spannungsbeaufschlagung des Überlappungsbereichs, wobei anhand des sich dabei einstellenden Spannungsverlaufs oder Stromverlaufs die Kapazität und/oder die Impedanz bestimmt werden.

Bevorzugt ist vorgesehen, dass eine erste Kapazität und/oder eine erste Impedanz vor dem Erhitzen der Schweißzone ermittelt wird und dass eine zweite Kapazität und/oder eine zweite Impedanz während der Erhitzung der Schweißzone oder nach der Erhitzung der Schweißzone ermittelt wird und dass eine Differenz zwischen der ersten Kapazität und der zweiten Kapazität und/oder zwischen der ersten Impedanz und der zweiten Impedanz von der Messeinrichtung zu einem Messsignal verarbeitet wird. Durch diese Vorgehensweise wird bereits vor der Durchführung des Schweißvorgangs die erste Kapazität und/oder die erste Impedanz ermittelt, die gegebenenfalls mit einem vorgegebenen Kapazitätswert bzw. Impedanzwert verglichen werden kann, um bereits vorliegende Störungen im Überlappungsbereich der ersten Kunststofffolie und der zweiten Kunststofffolie feststellen zu können. Während der Durchführung oder nach der Durchführung des Schweißvorgangs, der durch die Erhitzung der Schweißzone bewirkt wird, erfolgt eine weitere Kapazitätsmessung bzw. Impedanzmessung, wobei auch hier aus den ermittelten Absolutbeträgen der Kapazität und/oder der Impedanz und einem Vergleich mit vorgegebenen Kapazitätswerten und/oder Impedanzwerten ein Rückschluss auf den durchgeführten Schweißvorgang gezogen werden kann.

Abschließend erfolgt eine Differenzbildung zwischen der ersten Kapazität und der zweiten Kapazität, wobei die ermittelte Differenz zu einem Messsignal verarbeitet wird, das von der Messeinrichtung oder von einer mit der Messeinrichtung verbundenen, übergeordneten Steuerung ermittelt werden kann.

Bei einer alternativen Ausgestaltung des Verfahrens ist vorgesehen, dass eine kontinuierliche Ermittlung der Kapazität und/oder der Impedanz während des Erhitzens der Schweißzone durchgeführt wird. Hierbei kann anhand des Verlaufs der Kapazität und/oder Impedanz, die sich dynamisch während der Durchführung des Schweißvorgangs ändern kann, eine Kontrolle des Schweißvorgangs vorgenommen werden. Beispielsweise kann vorgesehen werden, eine Änderungsgeschwindigkeit für die Kapazität und/oder Impedanz oder einen Maximalwert oder einen Minimalwert für die Kapazität oder Impedanz festzustellen.

In weiterer Ausgestaltung des Verfahrens ist vorgesehen, dass eine mit der Messeinrichtung verbundene Schweißsteuerung eine Bereitstellung von elektrischer Schweißenergie an die erste Schweißschiene oder an die erste Schweißschiene und die zweite Schweißschiene vornimmt und eine Übertragung von Steuersignalen zwischen der Messeinrichtung und der Schweißsteuerung vorgenommen wird, um die Bereitstellung der Schweißenergie in Abhängigkeit von Steuersignalen, die von der Messeinrichtung an die Schweißsteuerung übertragen werden, oder die Durchführung der Kapazitätsmessung oder der Impedanzmessung in Abhängigkeit von Schweißsignalen, die von der Schweißsteuerung an die Messeinrichtung übertragen werden, vorzunehmen. Beispielhaft umfasst die Schweißsteuerung einen Mikroprozessor oder Mikrocontroller, auf dem ein Softwareprogramm zur Durchführung des Schweißvorgangs abläuft. Besonders vorteilhaft ist es, wenn die Schweißsteuerung mit einer Mensch-Maschine-Schnittstelle ausgerüstet ist, über die eine Eingabe von Parametern von einem Bediener vorgenommen werden kann.

Die Schweißsteuerung ist für eine gesteuerte oder geregelte Bereitstellung von elektrischer Schweißenergie an die erste Schweißschiene oder sowohl an die erste Schweißschiene als auch an die zweite Schweißschiene ausgebildet. Zwischen der Messeinrichtung und der Schweißsteuerung ist eine Signalübertragung vorgesehen, beispielsweise kann von der Messeinrichtung ein Steuersignal an die Schweißsteuerung bereitgestellt werden, um den Beginn der Kapazitätsmessung oder Impedanzmessung zu signalisieren und der Schweißsteuerung die Information zu geben, dass die Durchführung des Schweißvorgangs gestartet werden kann.

Alternativ kann vorgesehen werden, dass die Schweißsteuerung ein Steuersignal an die Messeinrichtung bereitstellt, um gegebenenfalls eine Kapazitätsmessung oder eine Impedanzmessung zu vorgegebenen Zeitpunkten während der Durchführung des Schweißvorgangs vornehmen zu können.

Bevorzugt ist vorgesehen, dass die Schweißsteuerung eine impulsförmige Bereitstellung der Schweißenergie, insbesondere als Phasenanschnittsteuerung, mit einer Abfolge von Energiepulsen und Impulspausen vornimmt.

In weiterer Ausgestaltung des Verfahrens ist vorgesehen, dass in einer elektrischen Verbindung zwischen der Schweißsteuerung und der ersten Schweißschiene oder der ersten und der zweiten Schweißschiene, insbesondere in unmittelbarer Nachbarschaft zur ersten Schweißschiene, eine elektrische Trenneinrichtung, insbesondere ein Trennschalter, angeordnet ist, und dass die Schweißsteuerung eine Trennung der elektrischen Verbindung mit der ersten Schweißschiene oder mit der ersten und der zweiten Schweißschiene in den Impulspausen vornimmt und dass die Messeinrichtung die Kapazitätsmessung oder die Impedanzmessung in den Impulspausen vornimmt. Hierbei liegt die Überlegung zugrunde, dass die während der Durchführung des Schweißvorgangs zwischen der Schweißsteuerung und der ersten Schweißschiene oder der Schweißsteuerung und der ersten sowie der zweiten Schweißschiene fließenden Schweißströme einen negativen Einfluss auf die Messgenauigkeit für die Kapazitätsmessung bzw. Impedanzmessung haben.

Vor diesem Hintergrund kann vorgesehen werden, in denjenigen zeitlichen Abschnitten, in denen aufgrund der impulsförmigen Bereitstellung von Schweißenergie keine Stromfluss zwischen der Schweißsteuerung und der ersten Schweißschiene oder der ersten und der zweiten Schweißschiene vorliegt, zur Verbesserung des Messergebnisses eine vollständige, insbesondere galvanische, Trennung zwischen der Schweißsteuerung und der ersten Schweißschiene bzw. der ersten und der zweiten Schweißschiene vorzunehmen. Dies kann beispielhaft mit einem geeigneten Trennschalter verwirklicht werden, der wahlweise von der Schweißsteuerung oder von der Messeinrichtung angesteuert wird.

Vorteilhaft ist es, wenn die Schweißsteuerung die elektrische Schweißenergie mit einer ersten Frequenz, vorzugsweise mit einer Frequenz von 50 Hertz, bereitstellt und wenn die, insbesondere mit einem Hochpassfilter ausgerüstete, Messeinrichtung die Kapazität oder die Impedanz mit einer zweiten Frequenz, vorzugsweise mit einer Frequenz größer 500 Hertz, ermittelt. Dabei ist die erste Frequenz für die Bereitstellung der elektrischen Schweißenergie auf die Eigenschaften der ersten Schweißschiene bzw. der ersten Schweißschiene und der zweiten Schweißschiene abgestimmt. Die Schweißschienen weisen sowohl im Hinblick auf eine Aufheizdauer als auch im Hinblick auf eine Abkühldauer eine gewisse Trägheit auf, so dass für die Durchführung eines Schweißvorgangs keine dauerhafte elektrische Energiezufuhr an die erste Schweißschiene oder die erste sowie die zweite Schweißschiene erforderlich ist. Vielmehr erfolgt die Bereitstellung der elektrischen Schwei-ßenergie mit der ersten Frequenz, insbesondere im Rahmen einer Phasenanschnittsteuerung, um einen geeigneten Einfluss auf die an die erste Schweißschiene oder die erste sowie die zweite Schweißschiene bereitgestellte elektrische Energiemenge nehmen zu können. Aufgrund der thermischen Trägheit der Schweißschienen kann hierbei beispielsweise auf die Frequenz des elektrischen Versorgungsnetzes zurückgegriffen werden, die typischerweise im Bereich von 50 Hertz liegt.

Demgegenüber erfolgt die Messung der Kapazität oder der Impedanz mit einer zweiten Frequenz, die höher als die erste Frequenz ist. Bei Verwendung eines geeigneten Hochpassfilters für die Messeinrichtung können niederfrequente Signalanteile, die überwiegend von den Schweißströmen erzeugt werden, zumindest weitgehend ausgefiltert werden, so dass lediglich die hochfrequenten Signalanteile für die Bestimmung der Kapazität oder der Impedanz herangezogen werden. Besonders vorteilhaft ist es, wenn die erste Frequenz 50 Hertz beträgt und wenn die zweite Frequenz größer als 500 Hertz, insbesondere größer als 1000 Hertz ist.

Zweckmäßig ist es, wenn die Messeinrichtung mit einem Sensor verbunden ist und mit dem Sensor wenigstens ein Messwert aus der Gruppe: Temperatur in der Schweißzone, Druck in der Schweißzone, Abstand der ersten Schweißschiene von der zweiten Schweißschiene, ermittelt werden kann. Vorzugsweise ist der Sensor an der ersten Schweißschiene angebracht oder weist einen ersten Sensorteil auf, der an der ersten Schweißschiene angebracht ist, sowie einen zweiten Sensorteil, der an der zweiten Schweißschiene angebracht ist. Mit dem Sensor, bei dem es sich beispielsweise um einen Temperatursensor und/oder um einen Drucksensor und/oder um einen Abstandssensor handeln kann, erhält die Messeinrichtung zusätzliche Informationen über die Verhältnisse in der Schweißzone und kann dadurch die Ermittlung der Kapazität oder der Impedanz verbessern bzw. die Plausibilität von ermittelten Messwerten überprüfen.

Die Aufgabe der Erfindung wird für eine Schweißeinrichtung zum Verschweißen von Kunststofffolien in nachfolgender Weise gelöst: die Schweißeinrichtung umfasst eine Schweißsteuerung, die zur Bereitstellung von Schweißenergie ausgebildet ist, mit einer ersten Schweißschiene und mit einer gegenüberliegend zur ersten Schweißschiene angeordneten zweiten Schweißschiene, die eine größenvariable Schweißzone begrenzen, die zur Aufnahme eines Überlappungsbereichs einer ersten Kunststofffolie mit einer zweiten Kunststofffolie ausgebildet ist, wobei wenigstens die erste Schweißschiene elektrisch mit der Schweißsteuerung verbunden ist, sowie mit einer Messeinrichtung, die für eine Ermittlung einer Kapazität und/oder Impedanz des zwischen der ersten Schweißschiene und der zweiten Schweißschiene aufgenommenen Überlappungsbereichs ausgebildet ist.

Beispielhaft kann vorgesehen sein, dass eine kontinuierliche Ermittlung der Kapazität und/oder der Impedanz während des Erhitzens der Schweißzone durchgeführt wird. Hierbei kann anhand des Verlaufs der Kapazität und/oder Impedanz, die sich dynamisch während der Durchführung des Schweißvorgangs ändern kann, eine Kontrolle des Schweißvorgangs vorgenommen werden.

Bevorzugt ist vorgesehen, dass die Schweißsteuerung elektrisch mit der Messeinrichtung verbunden ist und dass die Schweißsteuerung für eine Bereitstellung von elektrischer Schweißenergie an die erste Schweißschiene oder an die erste Schweißschiene und die zweite Schweißschiene in Abhängigkeit von Messsignalen der Messeinrichtung ausgebildet ist. Hierbei folgt die Funktion der Schweißsteuerung der Funktion der Messeinrichtung. Beispielsweise kann vorgesehen werden, dass die Messeinrichtung zunächst eine Kapazitätsmessung oder Impedanzmessung vor der Erhitzung der Schweißzone durchführt und anschließend ein geeignetes Steuersignal an die Schweißsteuerung bereitstellt, damit diese die elektrische Energie zu Erwärmung der Schweißzone zur Verfügung stellt. Anschließend kann wenigstens während einer Impulspause in der Erhitzungsphase oder nach Beendigung der Erhitzung eine weitere Kapazitätsmessung vorgenommen werden.

Bei einer alternativen Ausgestaltung ist vorgesehen, dass die Schweißsteuerung elektrisch mit der Messeinrichtung verbunden ist und dass die Schweißsteuerung für eine Bereitstellung von Schweißenergie an die erste Schweißschiene oder an die erste Schweißschiene und die zweite Schweißschiene sowie zur Ausgabe eines Schweißsignals an die Messeinrichtung ausgebildet ist und dass die Messeinrichtung für die Durchführung der Messung in Abhängigkeit von den Schweißsignalen der Schweißeinrichtung ausgebildet ist. Bei dieser Variante folgt die Funktion der Messeinrichtung der Funktion der Schweißsteuerung, so dass die Messeinrichtung anhand von Schweißsignalen, bei denen es sich um Steuersignale der Schweißsteuerung handelt, die Messung der Kapazität oder Impedanz durchführt.

Vorteilhaft ist es, wenn in einer elektrischen Verbindung zwischen der Schweißsteuerung und der ersten Schweißschiene oder zwischen der Schweißsteuerung und der ersten Schweißschiene und der zweiten Schweißschiene, insbesondere in unmittelbarer Nachbarschaft zur ersten Schweißschiene, eine elektrische Trenneinrichtung, insbesondere ein Trennschalter, angeordnet ist und dass die Schweißsteuerung für eine zeitweilige Trennung der elektrischen Verbindung mit der ersten Schweißschiene oder mit der ersten und der zweiten Schweißschiene ausgebildet ist.

In weiterer Ausgestaltung der Erfindung ist vorgesehen, dass die Messeinrichtung mit einem, insbesondere der ersten Schweißschiene zugeordneten Sensor verbunden ist, der für eine Ermittlung wenigstens eines Messwerts aus der Gruppe: Temperatur in der Schweißzone, Druck in der Schweißzone, Abstand der ersten Schweißschiene von der zweiten Schweißschiene, ausgebildet ist.

Vorteilhaft ist es, wenn die Schweißsteuerung für eine Bereitstellung der Schweißenergie mit einer ersten Frequenz, vorzugsweise mit einer Frequenz von 50 Hertz, ausgebildet ist und dass die, insbesondere mit einem auf die zweite Frequenz angepassten Hochpassfilter ausgerüstete, Messeinrichtung für eine Ermittlung der Kapazität oder Impedanz mit einer zweiten Frequenz, vorzugsweise mit einer Frequenz größer 500 Hertz, ausgebildet ist.

Eine vorteilhafte Ausführungsform der Erfindung ist in der Zeichnung dargestellt. Hierbei zeigt:
- Figur 1:: eine streng schematische Übersichtsdarstellung einer Schweißeinrichtung zum Verschweißen von Kunststofffolien,
- Figur 2: ein streng schematisiertes Blockschaltbild einer ersten Ausführungsform von elektrischen Funktionskomponenten für die Schweißeinrichtung gemäß der Figur 1, und
- Figur 3: ein streng schematisiertes Blockschaltbild einer zweiten Ausführungsform von elektrischen Funktionskomponenten für die Schweißeinrichtung gemäß der Figur 1.

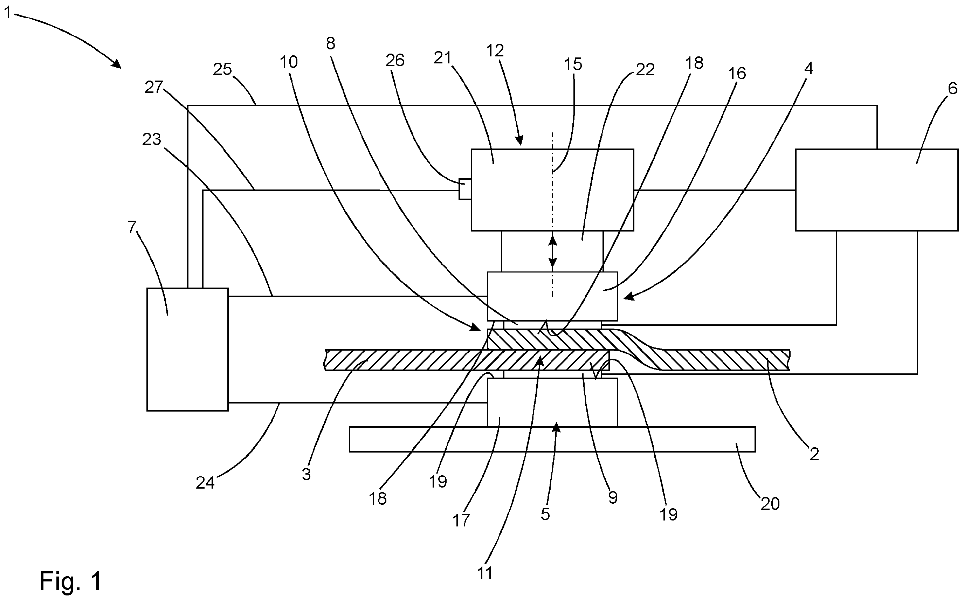

Eine in der nicht maßstäblichen Figur 1 rein schematisch dargestellte Schweißeinrichtung 1 ist für eine stoffschlüssige Verbindung einer ersten Kunststofffolie 2 mit einer zweiten Kunststofffolie 3 in einem Überlappungsbereich 11 vorgesehen. Rein exemplarisch weisen die erste Kunststofffolie 2 und die zweite Kunststofffolie 3 jeweils die gleiche Dicke auf und sind jeweils mit einem Randbereich überlappend angeordnet, wodurch der Überlappungsbereich 11 gebildet wird. Dieser Überlappungsbereich ist für die Verschweißung mit Hilfe der Schweißeinrichtung 1 vorgesehen und aus diesem Grund in einer Schweißzone 10 angeordnet, die von einer ersten Schweißschiene 4 und einer gegenüberliegend zur ersten Schweißschiene 4 angeordneten zweiten Schweißschiene 5 begrenzt wird.

Rein exemplarisch erstrecken sich sowohl die erste Schweißschiene 4 als auch die zweite Schweißschiene 5 in einer Raumrichtung, die normal zur Darstellungsebene der Figur 1 ausgerichtet ist, über eine Länge, die erheblich größer als die in der Figur 1 erkennbare Querschnittsprofilierung der ersten Schweißschiene 4 und der zweiten Schweißschiene 5 ist.

Beispielhaft umfasst die erste Schweißschiene 4 einen ersten Grundkörper 16, der gemäß der Darstellung der Figur 1 rechteckig profiliert ist und der sich normal zur Darstellungsebene der Figur 1 mit einer nicht dargestellten längsten Kante erstreckt. Rein exemplarisch ist der erste Grundkörper als Aluminiumprofil ausgebildet und trägt an einer ersten Arbeitsfläche 18 ein erstes Heizband 8. Die zweite Schweißschiene 5 ist in gleicher Weise wie die erste Schweißschiene 4 aufgebaut und umfasst einen zweiten Grundkörper 17, der an einer zweiten Arbeitsfläche 19 mit einem zweiten Heizband 9 versehen ist.

Sowohl das erste Heizband 8 als auch das zweite Heizband 9 sind elektrisch mit einer Schweißsteuerung 6 verbunden, die für eine Stromversorgung des ersten Heizbands 8 und des zweiten Heizbands 9 vorgesehen ist, um durch Strombeaufschlagung eine definierte Erwärmung des jeweiligen Heizbands 8, 9 für die Durchführung des Schweißvorgangs in der Schweißzone 10 zu ermöglichen. Rein exemplarisch liegt die zweite Schweißschiene 5 auf einem Arbeitstisch 20 auf, an dem in nicht näher dargestellter Weise auch ein Aktor 12 festgelegt ist. Der Aktor 12 umfasst ein Aktorgehäuse 21 sowie ein linearbeweglich im Aktorgehäuse 21 aufgenommenes Aktorglied 22, das stirnseitig mit einer Oberseite der ersten Schweißschiene 4 verbunden ist. Rein exemplarisch handelt es sich bei dem Aktor 12 um einen elektrischen Linearantrieb, insbesondere einen Gewindespindelantrieb, mit dessen Hilfe eine Verkleinerung oder Vergrößerung eines Abstands zwischen der ersten Schweißschiene 4 und der zweiten Schweißschiene 5 bewirkt werden kann. Zu diesem Zweck ist der Aktor 12 elektrisch direkt oder unter Zwischenschaltung einer separat ausgebildeten Aktorsteuerung indirekt mit der Schweißsteuerung 6 verbunden, die zur Bereitstellung von Antriebsenergie bzw. von Antriebssignalen an den Aktor 12 ausgebildet ist.

Dementsprechend kann mit den Komponenten: Arbeitstisch 20, Schweißsteuerung 6, Aktor 12, erste Schweißschiene 4 und zweite Schweißschiene 5 ein Verschweißen des Überlappungsbereichs 11 zwischen der ersten Kunststofffolie 2 und der zweiten Kunststofffolie 3 in der Schweißzone 10 vorgenommen werden. Um eine Überwachung dieses Schweißvorgangs zu ermöglichen, sind das erste Heizband 8 und das zweite Heizband 9 über eine erste Messleitung 23 bzw. eine zweite Messleitung 24 mit einer Messeinrichtung 7 elektrisch verbunden. Die Messeinrichtung 7 ist zur Ermittlung der Kapazität oder Impedanz in der Schweißzone 10 vorgesehen, die im Wesentlichen durch die Eigenschaften der ersten Kunststofffolie 2 und der zweiten Kunststofffolie 3 beeinflusst wird.

Die Messeinrichtung 7 steht über eine Signalleitung 25 in elektrischer Verbindung mit der Schweißsteuerung 6, wobei über die Signalleitung 25 ein Informationsaustausch zwischen der Messeinrichtung 7 und der Schweißsteuerung 6 im Hinblick auf einen zeitlichen Verlauf des Schweißvorgangs und der damit einhergehenden Messungen ermöglicht wird.

Ferner steht die Messeinrichtung 7 über eine Sensorleitung 27 mit einem Sensor 26 in elektrischer Verbindung, um Sensorsignale des Sensors 26 auswerten zu können. Rein exemplarisch handelt es sich beim Sensor 26 um einen am Aktor 12 angebrachten Kraftsensor, der zur Erfassung einer vom Aktor 12 auf die erste Schweißschiene 4 aufgebrachte Druckkraft ausgebildet ist.

Rein exemplarisch ist vorgesehen, dass die erste Kunststofffolie 2 und die zweite Kunststofffolie 3 im Überlappungsbereich 11 flächig und ohne Luftspalte oder unerwünschte Falten aneinander anliegen, was gewissermaßen den Idealzustand für das nachfolgende Verschweißen der beiden Kunststofffolien 2, 3 in der Schweißzone 10 darstellt. Sofern sich im Überlappungsbereich 11 jedoch unerwünschte Falten oder Fremdkörper befinden sollten, wird die Qualität der Verschweißung im Überlappungsbereich in Frage gestellt. Um ein Vorhandensein solcher Störungen beurteilen zu können, ist die Messeinrichtung 7 vorgesehen, die zur Kapazitätsbestimmung bzw. Impedanzbestimmung für den aus der ersten Schweißschiene 4, der zweiten Schweißschiene 5 und den beiden Kunststofffolien 2 und 3 gebildeten Kondensator ausgebildet ist.

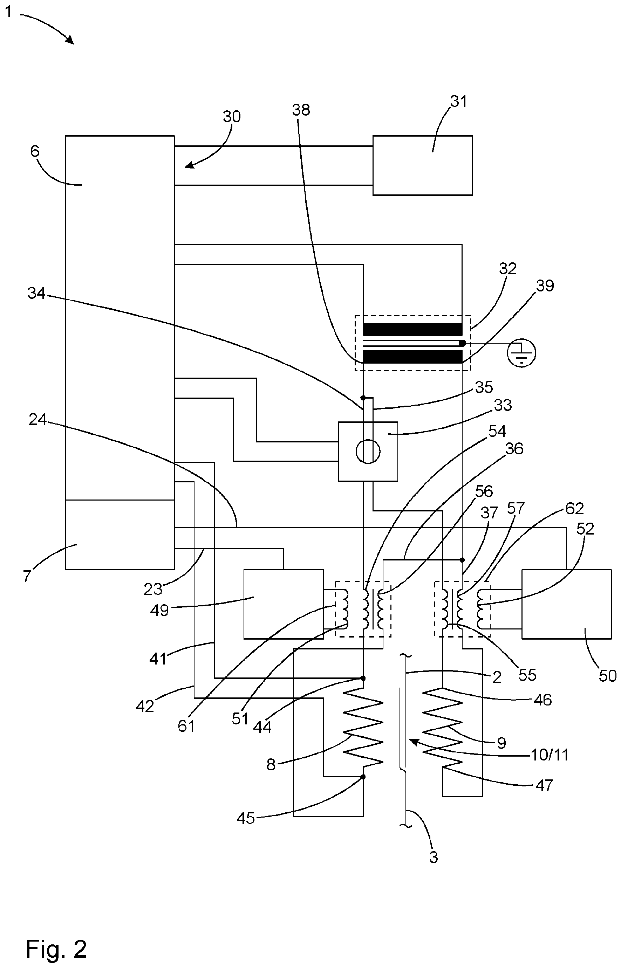

In dem Blockschaltbild gemäß der Figur 2, in der eine erste Ausführungsform von elektrischen Funktionskomponenten für die Schweißeinrichtung gemäß der Figur 1 dargestellt sind, werden für funktionsgleiche Komponenten die gleichen Bezugszeichen wie in der Figur 1 verwendet, wobei die Darstellung der Figur 2 auf die elektrische Verschaltung der Komponenten der Schweißeinrichtung 1 ausgerichtet ist, während der mechanisehe Aufbau der Schweißeinrichtung 1 in der Figur 2 nicht von Bedeutung ist.

Übereinstimmend mit der Figur 1 umfasst die Schweißeinrichtung 1 gemäß der Darstellung der Figur 2 eine Schweißsteuerung 6, eine Messeinrichtung 7, ein erstes Heizband 8 und ein zweites Heizband 9.

Die Schweißsteuerung 6 und die Messeinrichtung 7 sind gemäß der Darstellung der Figur 2 in einem gemeinsamen Gehäuse untergebracht, wobei eine Kommunikation zwischen der Schweißsteuerung 6 und der Messeinrichtung 7 über die in der Figur 2 nicht dargestellte, aus der Figur 1 bekannte Signalleitung 25 erfolgt. Wahlweise ist vorgesehen, dass für die Schweißsteuerung 6 und die Messeinrichtung 7 jeweils ein separat ausgebildeter Prozessor mit entsprechender Peripherie und geeigneter Software genutzt wird. Alternativ kann auch vorgesehen sein, dass die Schweißsteuerung 6 und die Messeinrichtung 7 als Softwaremodule eines einzigen Prozessors ausgebildet sind.

Die Schweißsteuerung 6 weist einen Netzanschluss 30 auf, der zur Verbindung mit einer Stromquelle 31 ausgebildet ist. Ferner ist die Schweißsteuerung 6 elektrisch mit einer Primärseite eines Schweißtransformators 32 verbunden, mit dem die primärseitig von der Schweißsteuerung 6 bereitgestellte Schweißenergie sekundärseitig in die zur Durchführung des Schweißvorgangs erforderlichen Schweißströme für das erste Heizband 8 und das zweite Heizband 9 umgesetzt werden.

Für eine Überwachung des Schweißvorgangs ist ein Stromwandler 33 mit der Schweißsteuerung 6 verbunden, der eine erste Heizbandleitung 34 sowie eine zweite Heizbandleitung 35 umgibt, die sich von einem ersten Stromanschluss 38 bis zum ersten Heizband 8 bzw. zum zweiten Heizband 9 erstrecken. Mit dem Stromwandler 33 wird eine kontaktlose Schweißstromerfassung für den an die beiden Widerstandsbänder 8, 9 bereitgestellten Schweißstrom durchgeführt.

Die erste Heizbandleitung 34 erstreckt sich hierbei vom ersten Stromanschluss 38 bis zu einem ersten Heizbandanschluss 44 des ersten Heizbands 8, wobei in der ersten Heizbandleitung 34 eine erste Übertragerspule 54 angeordnet ist. Die zweite Heizbandleitung 35 erstreckt sich vom ersten Stromanschluss 38 bis zu einem ersten Heizbandanschluss 46 des zweiten Heizbands 9, wobei in der zweiten Heizbandleitung 35 eine zweite Übertragerspule 55 angeordnet ist.

Ausgehend von einem zweiten Stromanschluss 39 des Schweißtransformators 32 erstreckten sich eine dritte Heizbandleitung 36, die mit dem zweiten Heizbandanschluss 45 des ersten Heizbands 8 verbunden ist, sowie eine vierte Heizbandleitung 37, die mit dem zweiten Heizbandanschluss 47 des zweiten Heizbands 9 verbunden ist. Hierbei ist vorgesehen, dass in der dritten Heizbandleitung 36 eine dritte Übertragerspule 56 angeordnet ist und dass in der dritten Heizbandleitung 37 eine vierte Übertragerspule 57 angeordnet ist.

Am ersten Heizbandanschluss 44 sowie am zweiten Heizbandanschluss 45 des ersten Heizbands 8 sind jeweils Messleitungen 41, 42 angeschlossen, die mit der Schweißsteuerung 6 verbunden sind und die es der Schweißsteuerung 6 ermöglichen, einen Spannungsabfall am ersten Heizband 8 zu ermitteln, um zusätzliche Informationen über den Verlauf des Schweißvorgangs zu gewinnen.

Die erste Übertragerspule 54 bildet zusammen mit der dritten Übertragerspule 56 und einer ersten Koppelspule 51, die einer Anregungseinrichtung 49 zugehörig ist, einen ersten Übertrager 61, der für eine Einkopplung eines von der Anregungseinrichtung 49 bereitgestellten hochfrequenten Anregungssignals in das erste Heizband 8 ausgebildet ist. Die Anregungseinrichtung 49 ist über die erste Messleitung 23 mit der Messeinrichtung 7 verbunden.

Die zweite Übertragerspule 55 bildet zusammen mit der vierten Übertragerspule 57 und einer zweiten Koppelspule 52, die einer Detektionseinrichtung 50 zugehörig ist, einen zweiten Übertrager 62, der für eine Auskopplung und Auswertung eines auf das zweite Heizband 9 einwirkenden hochfrequenten Anregungssignals ausgebildet ist. Die Detektionseinrichtung 50 ist über die zweite Messleitung 24 mit der Messeinrichtung 7 verbunden.

Die Messeinrichtung 7 ist dazu ausgebildet, anhand des von der Anregungseinrichtung 49 auf das erste Heizband 8 eingekoppelten Anregungssignals und der von der Detektionseinrichtung 50 am zweiten Heizband 9 ausgekoppelten Signalantwort die Impedanz und daraus die Kapazität des vom ersten Heizband 8, vom zweiten Heizband 9 sowie von der ersten Kunststofffolie 2 und der zweiten Kunststofffolie 3 gebildeten Kondensators zu ermitteln. Ferner ist die Messeinrichtung 7 dazu eingerichtet, aus einem oder mehreren Absolutwerten der ermittelten Kapazität und/oder einer zeitlichen Änderung der Kapazität Rückschlüsse auf die Qualität der Schweißnaht für die Verbindung zwischen der ersten Kunststofffolie 2 und der zweiten Kunststofffolie 3 zu ziehen.

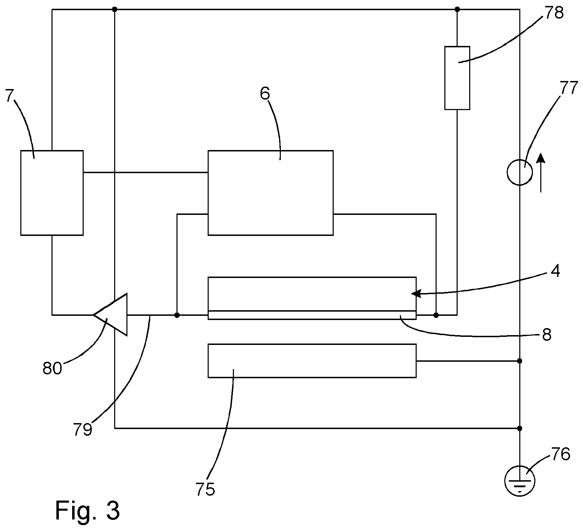

In dem Blockschaltbild gemäß der Figur 3, in der eine zweite Ausführungsform von elektrischen Funktionskomponenten für die Schweißeinrichtung gemäß der Figur 1 dargestellt sind, werden für funktionsgleiche Komponenten die gleichen Bezugszeichen wie in den Figuren 1 und 2 verwendet.

Rein exemplarisch wird davon ausgegangen, dass abweichend von der ersten Ausführungsform, wie sie in der Figur 2 dargestellt ist, bei der zweiten Ausführungsform gemäß der Figur 3 lediglich die erste Schweißschiene 4 mit einem ersten Heizband 8 versehen ist, während die zweite Schweißschiene 75 lediglich eine Gegendrucklage bildet und nicht mit einem Heizband versehen ist. Vielmehr ist vorgesehen, dass die zweite Schweißschiene 75 auf einem Massepotential 76 liegt. Das erste Heizband 8 der ersten Schweißschiene 4 ist zum einen in gleicher Weise wie bei der ersten Ausführungsform gemäß der Figur 2 elektrisch mit der Schweißsteuerung 6 verbunden, die ihrerseits nicht näher dargestellter Weise mit einer elektrischen Spannungsquelle gekoppelt ist. Ferner ist das erste Heizband 8 elektrisch mit einer Spannungsquelle 77 verbunden, die zur Bereitstellung einer im Wesentlichen konstanten elektrischen Ladungsmenge an das erste Heizband 8 ausgebildet ist. Zwischen der Spannungsquelle 77 und dem ersten Heizband 8 ist ein Vorwiderstand 78 angeordnet, über den ein geringfügiger Ladungszustrom an das erste Heizband 8 gewährleistet werden kann. Dieser Ladungszustrom ist vorzugsweise derart bemessen, dass eventuell vorliegende parasitäre Kopplungen des ersten Heizbands 8, die zu einem unerwünschten Ladungsabfluss vom Heizband 8 führen, vorzugsweise vollständig kompensiert werden können.

Das erste Heizband 8 ist über eine Messleitung 79 mit einem elektrischen Verstärker 80 verbunden, der zur Verstärkung eines am ersten Heizband 8 vorliegenden Signalpegels ausgebildet ist. Eine Ausgangsleitung 81 des Verstärkers 81 ist mit der Messeinrichtung 7 verbunden, die ihrerseits mit der Schweißsteuerung 6 verbunden ist.

Bei der zweiten Ausführungsform gemäß der Figur 3 kann im Unterschied zur ersten Ausführungsform gemäß der Figur 2 unmittelbar und ohne Verwendung von Übertragern während der Bestromung des ersten Heizbands 8 eine Messung derjenigen elektrischen Spannung vorgenommen werden, die sich unter der Voraussetzung einer gleichbleibenden elektrischen Ladungsmenge im ersten Heizband 8 gegenüber der zweiten Schweißschiene 75 einstellt und die ein Maß für die Kapazität der in der Schweißzone 10 angeordneten Materialien ist. Aus dieser Spannung kann, insbesondere kontinuierlich, ein Rückschluss auf die Kapazität und/oder Impedanz der Materialien in der Schweißzone 10 gezogen werden.

## Patentansprüche

1. Verfahren zur Überwachung eines Schweißvorgangs für Kunststofffolien (2, 3) mit den Schritten: Anordnen eines Überlappungsbereichs (11), der von einer ersten Kunststofffolie (2) und von einer zweiten Kunststofffolie (3) gebildet wird, in einer Schweißzone (10), die von einer ersten Schweißschiene (4) und von einer zweiten Schweißschiene (5) begrenzt wird, Ermitteln einer Kapazität und/oder einer Impedanz für den Überlappungsbereich (11) vor einer Erhitzung der Schweißzone (10) und/oder während der Erhitzung der Schweißzone (10) und/oder nach der Erhitzung der Schweißzone (10).

2. Verfahren nach Anspruch 1, **dadurch gekennzeichnet, dass** von der Messeinrichtung (7) für die Ermittlung der Kapazität und/oder der Impedanz eine vorgegebene elektrische Ladungsmenge an die erste Schweißschiene (4) bereitgestellt wird und wenn die zweite Schweißschiene (5) auf einem konstanten elektrischen Potential liegt oder dass eine zeitlich variable elektrische Spannung zwischen der ersten Schweißschiene (4) und der zweiten Schweißschiene (5) angelegt wird und dass eine Ermittlung eines elektrischen Spannungsverlaufs und/oder eines elektrischen Stromverlaufs vorgenommen wird, um die Kapazität und/oder Impedanz zu bestimmen.

3. Verfahren nach Anspruch 1 oder 2, **dadurch gekennzeichnet, dass** eine erste Kapazität und/oder eine erste Impedanz vor dem Erhitzen der Schweißzone (10) ermittelt wird und dass eine zweite Kapazität und/oder eine zweite Impedanz während der Erhitzung der Schweißzone (10) oder nach der Erhitzung der Schweißzone (10) ermittelt wird und dass eine Differenz zwischen der ersten Kapazität und der zweiten Kapazität und/oder zwischen der ersten Impedanz und der zweiten Impedanz von der Messeinrichtung (7) zu einem Messsignal verarbeitet wird.

4. Verfahren nach Anspruch 2, **dadurch gekennzeichnet, dass** eine kontinuierliche Ermittlung der Kapazität und/oder der Impedanz während des Erhitzens der Schweißzone (10) durchgeführt wird.

5. Verfahren nach Anspruch 1, 2, 3 oder 4, **dadurch gekennzeichnet, dass** eine mit der Messeinrichtung (7) verbundene Schweißsteuerung (6) eine Bereitstellung von elektrischer Schweißenergie an die erste Schweißschiene (4) oder an die erste Schweißschiene (4) und die zweite Schweißschiene (5) vornimmt und eine Übertragung von Steuersignalen zwischen der Messeinrichtung (7) und der Schweißsteuerung (6) vorgenommen wird, um die Bereitstellung der Schweißenergie in Abhängigkeit von Steuersignalen, die von der Messeinrichtung (7) an die Schweißsteuerung (6) übertragen werden, oder die Durchführung der Kapazitätsmessung oder der Impedanzmessung in Abhängigkeit von Schweißsignalen, die von der Schweißsteuerung (6) an die Messeinrichtung (7) übertragen werden, vorzunehmen.

6. Verfahren nach Anspruch 5, **dadurch gekennzeichnet, dass** die Schweißsteuerung (6) eine impulsförmige Bereitstellung der Schweißenergie, insbesondere als Phasenanschnittsteuerung, mit einer Abfolge von Energiepulsen und Impulspausen vornimmt.

7. Verfahren nach Anspruch 5 oder 6, **dadurch gekennzeichnet, dass** in einer elektrischen Verbindung zwischen der Schweißsteuerung und der ersten Schweißschiene oder der ersten und der zweiten Schweißschiene, insbesondere in unmittelbarer Nachbarschaft zur ersten Schweißschiene, eine elektrische Trenneinrichtung, insbesondere ein Trennschalter, angeordnet ist, und dass die Schweißsteuerung eine Trennung der elektrischen Verbindung mit der ersten Schweißschiene oder mit der ersten und der zweiten Schweißschiene in den Impulspausen vornimmt und dass die Messeinrichtung die Kapazitätsmessung oder die Impedanzmessung in den Impulspausen vornimmt.

8. Verfahren nach Anspruch 5 oder 6, **dadurch gekennzeichnet, dass** die Schweißsteuerung (6) die elektrische Schweißenergie mit einer ersten Frequenz, vorzugsweise mit einer Frequenz von 50 Hz, bereitstellt und dass die, insbesondere mit einem Hochpassfilter ausgerüstete, Messeinrichtung (7) die Kapazität oder die Impedanz mit einer zweiten Frequenz, vorzugsweise mit einer Frequenz größer 500 Hz, ermittelt.

9. Verfahren nach einem der vorhergehenden Ansprüche, **dadurch gekennzeichnet, dass** die Messeinrichtung (7) mit einem Sensor (26) verbunden ist und mit dem Sensor wenigstens ein Messwert aus der Gruppe: Temperatur in der Schweißzone (10), Druck in der Schweißzone (10), Abstand der ersten Schweißschiene (4) von der zweiten Schweißschiene (5), ermittelt werden kann.

10. Schweißeinrichtung (1) zum Verschweißen von Kunststofffolien, mit einer Schweißsteuerung (6), die zur Bereitstellung von Schweißenergie ausgebildet ist, mit einer ersten Schweißschiene (4) und mit einer gegenüberliegend zur ersten Schweißschiene (4) angeordneten zweiten Schweißschiene (5), die eine größenvariable Schweißzone (10) begrenzen, die zur Aufnahme eines Überlappungsbereichs (11) einer ersten Kunststofffolie (2) mit einer zweiten Kunststofffolie (3) ausgebildet ist, wobei wenigstens die erste Schweißschiene (4) elektrisch mit der Schweißsteuerung (6) verbunden ist, sowie mit einer Messeinrichtung (7), die für eine Ermittlung einer Kapazität und/oder Impedanz des zwischen der ersten Schweißschiene (4) und der zweiten Schweißschiene (5) aufgenommenen Überlappungsbereichs (11) ausgebildet ist.

11. Schweißeinrichtung (1) nach Anspruch 10, **dadurch gekennzeichnet, dass** die Schweißsteuerung (6) elektrisch mit der Messeinrichtung (7) verbunden ist und dass die Schweißsteuerung (6) für eine Bereitstellung von elektrischer Schweißenergie an die erste Schweißschiene (4) oder an die erste Schweißschiene (4) und die zweite Schweißschiene (5) in Abhängigkeit von Messsignalen der Messeinrichtung (7) ausgebildet ist.

12. Schweißeinrichtung (1) nach Anspruch 10, **dadurch gekennzeichnet, dass** die Schweißsteuerung (6) elektrisch mit der Messeinrichtung (7) verbunden ist und dass die Schweißsteuerung (6) für eine Bereitstellung von Schweißenergie an die erste Schweißschiene (4) oder an die erste Schweißschiene (4) und die zweite Schweißschiene (5) sowie zur Ausgabe eines Schweißsignals an die Messeinrichtung (7) ausgebildet ist und dass die Messeinrichtung (7) für die Durchführung der Messung in Abhängigkeit von den Schweißsignalen der Schweißeinrichtung (6) ausgebildet ist.

13. Schweißeinrichtung nach Anspruch 10, 11 oder 12, **dadurch gekennzeichnet, dass** in einer elektrischen Verbindung zwischen der Schweißsteuerung und der ersten Schweißschiene oder zwischen der Schweißsteuerung und der ersten Schweißschiene und der zweiten Schweißschiene, insbesondere in unmittelbarer Nachbarschaft zur ersten Schweißschiene, eine elektrische Trenneinrichtung, insbesondere ein Trennschalter, angeordnet ist und dass die Schweißsteuerung für eine zeitweilige Trennung der elektrischen Verbindung mit der ersten Schweißschiene oder mit der ersten und der zweiten Schweißschiene ausgebildet ist.

14. Schweißeinrichtung (1) nach Anspruch 10, 11 oder 12, **dadurch gekennzeichnet, dass** die Messeinrichtung (7) mit einem, insbesondere der ersten Schweißschiene (4) zugeordneten, Sensor (26) verbunden ist, der für eine Ermittlung wenigstens eines Messwerts aus der Gruppe: Temperatur in der Schweißzone (10), Druck in der Schweißzone (10), Abstand der ersten Schweißschiene (4) von der zweiten Schweißschiene (5), ausgebildet ist.

15. Schweißeinrichtung (1) nach Anspruch 10, 11 oder 12, **dadurch gekennzeichnet, dass** die Schweißsteuerung (6) für eine Bereitstellung der Schweißenergie mit einer ersten Frequenz, vorzugsweise mit einer Frequenz von 50 Hz, ausgebildet ist und dass die, insbesondere mit einem auf die zweite Frequenz angepassten Hochpassfilter ausgerüstete, Messeinrichtung (7) für eine Ermittlung der Kapazität oder Impedanz mit einer zweiten Frequenz, vorzugsweise mit einer Frequenz größer 500 Hz, ausgebildet ist.
